# EUROPEAN PATENT APPLICATION

(11) **EP 4 550 771 A1**
(43) Date of publication of application: **07.05.2025**
(21) Application number: 22950355.2
(22) Date of filing: 19.07.2022
(51) Int. Cl.: H04N 5/208, H04N 5/21

(54) **DISPLAY DEVICE AND OPERATION METHOD THEREOF**

(30) Priority: 07.07.2022 KR 20220083508
(71) Applicant: LG Electronics Inc., Yeongdeungpo-gu Seoul 07336 (KR)
(72) Inventor: PARK, Jongho, Seoul 06772 (KR); AHN, Sungdae, Seoul 06772 (KR)
(74) Representative: Schornack, Oliver
(86) International application number: PCT/KR2022/010555
(87) International publication number: WO 2024/010129

(57) **Abstract**

A display device according to an embodiment of the present disclosure may comprise: a controller for acquiring the surface area of a flat area having few detail components on the basis of image data, acquiring a gain value for removing contour noise, on the basis of the surface area of the flat area, and generating result image data on the basis of the gain value; and a display for outputting an image on the basis of the result image data.

## Description

### TECHNICAL FIELD

The present disclosure relates to a display device and an operation method thereof. More particularly, the present disclosure relates to a display device for outputting an image having minimized contour noise and an operation method thereof.

### BACKGROUND ART

Display devices are devices that have functions of receiving, processing, and displaying images for the user to view. Such a display device receives, for example, a broadcast signal selected by the user from broadcast signals transmitted from a broadcasting station, separates a video signal from the received signal, and then displays the separated video signal on a display.

When outputting the image using the display device, contour noise generally occurs.

The contour noise, which is also known as pseudo-contour, is a deterioration phenomenon in which noise in the form of contours is observed on a flat brightness area in the original image in which there are no actual contours.

The contour noise is noise that occurs during a quantization process when acquiring the image, an image compression and restoration process, and an image processing process for improving image quality and may be seen mainly on the flat area.

Current display devices remove the contour noise at a consistent intensity (such as using a static curve) to remove the contour noise from the image. In this case, the contour noise is removed without considering motion information of the image at all, resulting in side effects such as blurring or halos around an object in the image with fast motion.

Thus, a method for removing the contour noise that considers the motion information of the image is required. That is, in consideration of the motion information of the image, an intensity of contour noise removal increases when an amount of motion is small, and an intensity of contour noise removal decreases when the amount of motion is large, thereby minimizing the side effects caused by the contour noise removal. In addition, in this case, a method for minimizing even the problem in which the contour noise is not removed when there is a large amount of motion in the image in spite of the large number of flat areas.

### DISCLOSURE OF THE INVENTION

### TECHNICAL PROBLEM

The present disclosure is to provide a display device, in which side effects occurring when removing contour noise from an image, and an operation method thereof.

The present disclosure is to provide a display device, in which contour noise occurring on a flat area is effectively removed, and an operation method thereof.

The present disclosure is to minimize a problem in which contour noise is not removed when there is a large amount of motion in a flat area, in which a large amount of contour noise exists.

### TECHNICAL SOLUTION

A display device according to an embodiment of the present disclosure may include a controller configured to acquire a surface area of a flat area having few detail components on the basis of image data, acquire a gain value for removing contour noise on the basis of the surface area of the flat area, and generate result image data on the basis of the gain value, and a display configured to output an image on the basis of the result image data.

When the surface area of the flat area is less than a preset threshold value, the gain value may be fixed.

When the surface area of the flat area is equal to or greater than a preset threshold value, the gain value may be variable.

The larger the surface area of the flat area, the higher the gain value.

The controller may be configured to acquire motion information on the basis of the image data and acquire the gain value on the basis of the surface area of the flat area and the motion information.

The gain value when an amount of motion depending on the motion information is large may be less than the gain value when the amount of motion is small.

The controller may be configured to acquire the gain value on the basis of the motion information, maintain the acquired gain value when the surface area of the flat area is less than a preset threshold value, and increase in acquired gain value when the surface area of the flat area is equal to or greater than the threshold value.

The controller may be configured to convert the image data into a frequency domain and acquire the surface area of the flat area on the basis of a high frequency component of the converted frequency domain.

The controller may be configured to divide a screen into a plurality of blocks, extract blocks, in which the high frequency component is greater than a preset reference value, from each of the plurality of blocks, and require the surface area of the flat area on the basis of the number of extracted blocks.

The controller may be configured to generate blur data by applying the gain value to the image data and generate the result image data by combining the image data with the blur data.

A method for operating a display device according to an embodiment of the present disclosure may include acquiring a surface area of a flat area having few detail components on the basis of image data, acquiring a gain value for removing contour noise on the basis of the surface area of the flat area, generate result image data on the basis of the gain value, and outputting an image on the basis of the result image data.

When the surface area of the flat area is less than a preset threshold value, the gain value may be fixed, and when the surface area of the flat area is equal to or greater than a preset threshold value, the gain value may be variable.

The method may further include acquiring the gain value on the basis of the motion information, wherein the acquiring of the gain value may include acquiring the gain valve on the basis of the surface area of the flat area and the motion information.

The acquiring of the surface area of the flat area may include: converting the image data into a frequency domain; and acquiring the surface area of the flat area on the basis of a high frequency component of the converted frequency domain.

The generating of the result image data may include: applying the gain value to the image data to generate blurring image data; and combining the image data with the blurring image data to generate the result image data.

### ADVANTAGEOUS EFFECTS

According to the embodiment of the present disclosure, even though the amount of motion is large, when the surface area of the flat area is equal to or greater than the certain reference, the gain value for the contour noise removal may increase to minimize the problem in which the contour noise is not removed.

According to the embodiment of the present disclosure, the gain value for the contour noise removal may be adjusted in consideration of the surface area of the flat area as well as the motion information of the image to protect the vividness on the motion area depending on the characteristics of the image, or remove the contour noise of the flat area.

### BRIEF DESCRIPTION OF THE DRAWINGS

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device 200 according to an embodiment of the present disclosure.
Fig. 4 is a view illustrating an example of utilizing the remote control device according to an embodiment of the present disclosure.
Fig. 5 is a view illustrating an example for explaining a detail area and a flat area, which are divided depending on detail components of an image in the display device according to an embodiment of the present disclosure.
Fig. 6 is a control block diagram for explaining a method for outputting an image by dynamically setting a de-contour gain on the basis of detail components of an image in a display device according to a first embodiment of the present disclosure.
Fig. 7 is a view illustrating an example for explaining a method for acquiring a flat area by dividing an image into a plurality of blocks in the display device according to an embodiment of the present disclosure.
Fig. 8 is a flowchart illustrating a method for outputting the image by dynamically setting the de-contour gain on the basis of the detail components of the image in the display device according to the first embodiment of the present disclosure.
Fig. 9 is a view illustrating an example of de-contour gain information according to the first embodiment of the present disclosure.
Fig. 10 is a control block diagram for explaining a method for outputting an image by dynamically setting a de-contour gain on the basis of detail components of an image and motion information in a display device according to a second embodiment of the present disclosure.
Fig. 11 is a flowchart illustrating a method for outputting the image by dynamically setting the de-contour gain on the basis of the detail components of the image in the display device according to the second embodiment of the present disclosure.
Fig. 12 is a view illustrating an example of de-contour gain information according to the second embodiment of the present disclosure.
Fig. 13 is a view illustrating an example for explaining a state in which a degree of removal of contour noise varies depending on a surface area of a flat area in the display device according to the second embodiment of the present disclosure.

### MODE FOR CARRYING OUT THE INVENTION

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, may have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS may be used.

Accordingly, since various applications are freely added or deleted on a general purpose OS kernel, a display device described herein, for example, may perform various user-friendly functions. The display device, in more detail, may be a network TV, Hybrid Broadcast Broadband TV (HBBTV), smart TV, light-emitting diode (LED) TV, organic light-emitting diode (OLED) TV, and so on and in some cases, may be applied to a smartphone.

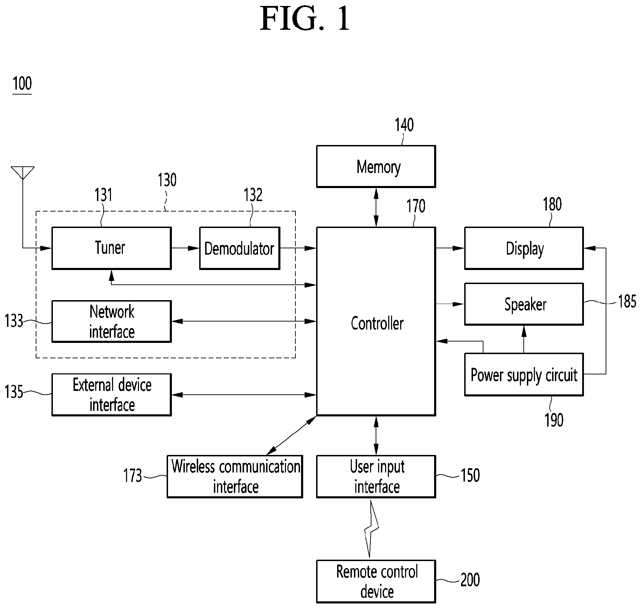

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a controller 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the controller 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the controller 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the controller 170, or may transmit signals from the controller 170 to a user. For example, the user input unit 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input unit 150 may transmit, to the controller 170, control signals input from local keys (not shown) such as a power key, a channel key, a volume key, and a setting key.

Image signals that are image-processed by the controller 170 may be input to the display unit 180 and displayed as images corresponding to the image signals. In addition, image signals that are image-processed by the controller 170 may be input to an external output device through the external device interface unit 135.

Voice signals processed by the controller 170 may be output to the audio output unit 185. In addition, voice signals processed by the controller 170 may be input to the external output device through the external device interface unit 135.

Additionally, the controller 170 may control overall operations of the display device 100.

In addition, the controller 170 may control the display device 100 by a user command or an internal program input through the user input unit 150, and may access the network to download a desired application or application list into the display device 100.

The controller 170 may output channel information selected by a user together with the processed image or voice signals through the display unit 180 or the audio output unit 185.

In addition, the controller 170 may output image signals or voice signals of an external device such as a camera or a camcorder, which are input through the external device interface unit 135, through the display unit 180 or the audio output unit 185, according to an external device image playback command received through the user input unit 150.

Moreover, the controller 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication unit 173. Therefore, a user of the wearable device may use the data processed by the display device 100 through the wearable device.

The display unit 180 may convert image signals, data signals, or on-screen display (OSD) signals, which are processed in the controller 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

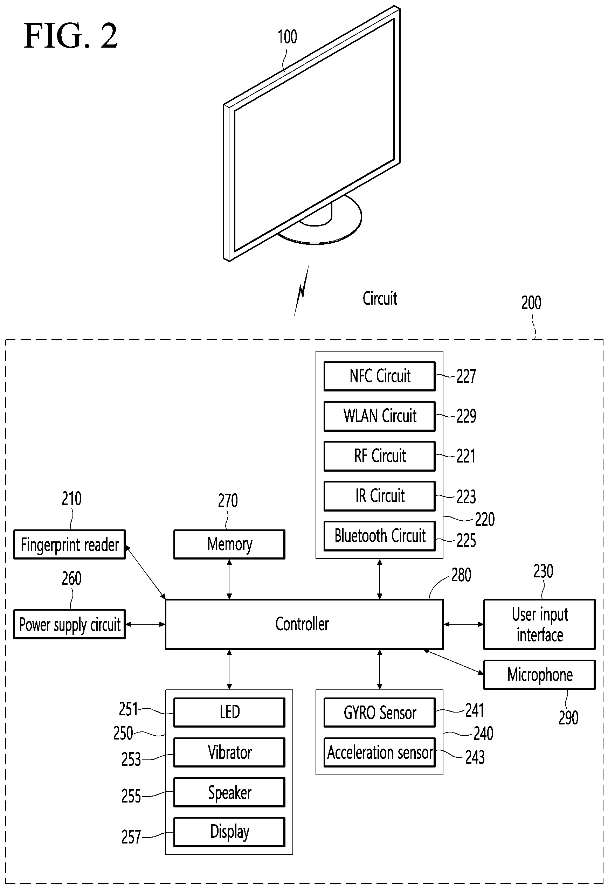

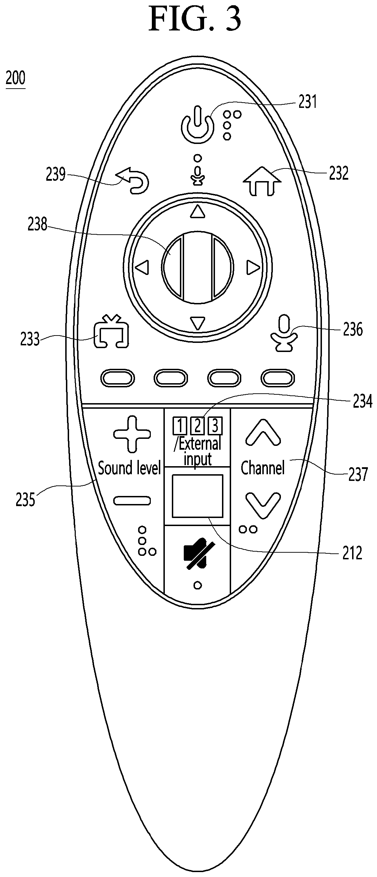

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a controller 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced.

The power supply unit 260 may resume the supply of power if a predetermined key provided at the remote control device 200 is operated.

The storage unit 270 may store various kinds of programs and application data required to control or operate the remote control device 200.

If the remote control device 200 transmits/receives signals wirelessly through the display device 100 and the RF module 221, the remote control device 200 and the display device 100 transmits/receives signals through a predetermined frequency band.

The controller 280 of the remote control device 200 may store, in the storage unit 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may be provided in plurality.

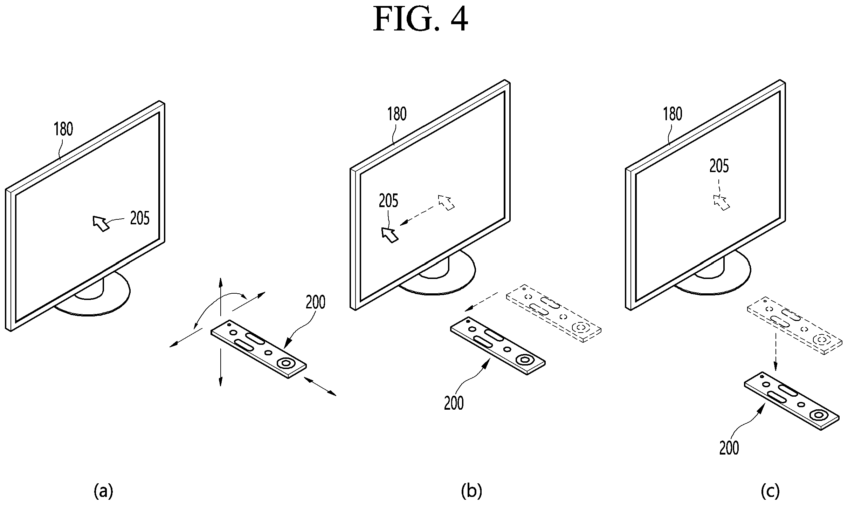

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected area in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

When outputting an image from the display device 100, contour noise may occur. The contour noise is caused by a loss of image information due to image compression and is commonly called contour noise.

The display device 100 may perform an operation to remove the contour noise, and this may be named 'de-contour', but this is only named for convenience of explanation, and thus, it is reasonable not to be limited to this name.

One of the methods for removing contour noise in the display device 100 is to generate a blurring image by inserting a blurring image of an original image into the original image. The display device 100 may remove the contour noise by synthesizing and blending the original image with the blurring image.

Specifically, the controller 170 generates the blurring image of the original image and reduces a gain value indicating a degree of de-contour when a mean absolute deviation (MAD) is large compared to pixels of the original image, thereby protecting detail components of the image and also increase in gain value indicating the degree of de-contour when the mean absolute deviation is small, thereby removing the contour noise.

However, the method for removing the contour noise used the gain value indicating the degree of de-contour as a constant value that did not take into account characteristics of the image.

For example, when the gain value indicating the degree of de-contour is assumed to be set to a maximum of 100, the display device 100 did not perform the de-contour or removed the contour noise using the gain value that is a constant value.

Alternatively, the display device 100 removed the contour noise by setting the gain value to one of Off (e.g., 0), Low (e.g., 30), Mid (removal by a medium level, e.g., 60), and High (strong removal, e.g., 90).

That is, the conventional display device 100 removed the contour noise according to the constant gain value without considering the characteristics of the image at all, and when a high de-contour gain was applied to output an image containing motion and details, a problem in which the image becomes blurred, or artifacts are generated at a boundary of an object included in the image, thereby damaging image clarity occurred.

Thus, the display device 100 according to an embodiment of the present disclosure may minimize a problem of deterioration of clarity of an output image by dynamically setting the de-contour gain on the basis of at least one of motion information and detail information of the image.

First, the display device 100 according to an embodiment of the present disclosure may output an image with minimized contour noise on the basis of the detail information of the image.

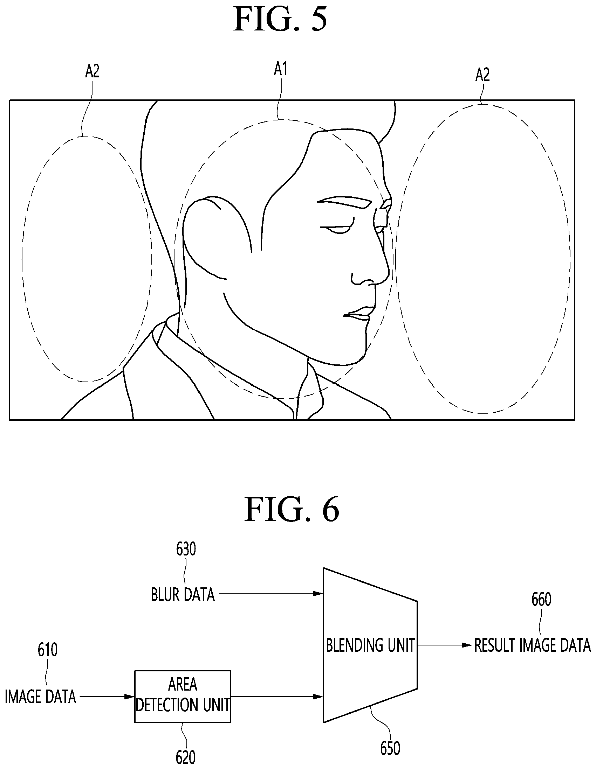

The controller 170 may acquire a flat area with a small amount of details on the basis of image data, and acquire a gain value for removing the contour noise on the basis of the surface area occupied by the flat area on the screen. Next, the flat area according to an embodiment of the present disclosure will be described with reference to FIG. 5.

Fig. 5 is a view illustrating an example for explaining a detail area and a flat area, which are divided depending on detail components of an image in the display device according to an embodiment of the present disclosure.

A detail area may mean an area on which a lot of detail components exists. The detail area may mean an area on which feature data related to the object and boundary included in the image appears. The detail area may be an edge & texture area. Referring to the example of Fig. 5, the detail area may be an area including a skin, a hair, ears, eyes, a nose, a mouth, etc., such as a first area A1.

The flat area may mean an area with little or no detail. The flat area may mean an area without an object or a boundary. The flat area may be a background area. Referring to the example of Fig. 5, the flat area may be an area including a background, such as a second area A2.

Fig. 6 is a control block diagram for explaining a method for outputting an image by dynamically setting a de-contour gain on the basis of detail components of an image in a display device according to a first embodiment of the present disclosure.

A de-contour gain may mean a gain value for removing contour noise.

A controller 170 may include an area detection unit 620 and a blending unit 650, but this is only distinguished for convenience of explanation, and thus, it is reasonable that the controller is not limited thereto.

Referring to Fig. 6, the controller 170 may receive image data 610. The received image data may be input to the area detection unit 620. The area detection unit 620 according to an embodiment of the present disclosure may detect the flat area with little or no detail components on the basis of the image data. The area detection unit 620 may distinguish the screen into the flat area and the detail area on the basis of the image data. That is, the area detection unit 620 may acquire each of the flat area and the detail area on the basis of the image data.

According to an embodiment, the area detection unit 620 may convert the image data into a frequency domain and detect the flat area on the basis of the high frequency component of the converted frequency domain. The area detection unit 620 may extract the high frequency component belonging to a preset high-frequency band from the converted frequency domain and detect the flat area on the basis of a ratio of the high-frequency components, etc.

For example, the area detection unit 620 may divide the screen into the plurality of blocks, extract a block having the high frequency component exceeding the preset reference value from each of the divided plurality of blocks, and recognize the extracted block as a block belonging to the flat area. As described above, when the screen is divided into the plurality of blocks, and then, the flat area is extracted, there is an advantage in that a time and load required for extracting the flat area are reduced.

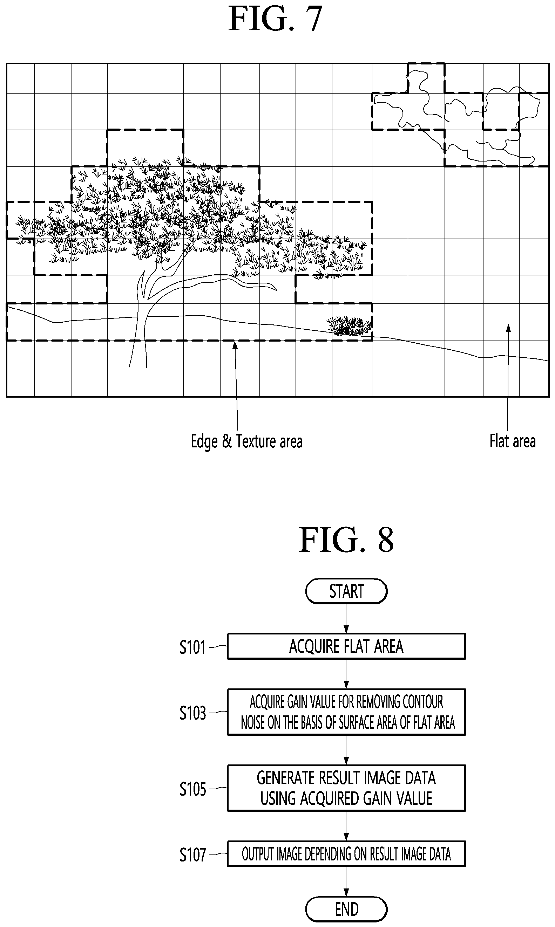

Fig. 7 is a view illustrating an example for explaining a method for acquiring a flat area by dividing an image into a plurality of blocks in the display device according to an embodiment of the present disclosure.

As illustrated in Fig. 7, the area detection unit 620 may divide the screen into the plurality of blocks. Here, the number of blocks to be divided may vary depending on a screen resolution, specifications, etc.

The area detection unit 620 may determine whether the high frequency component of each of the divided blocks is greater than or equal to the preset reference value, and recognize a block having a high frequency component greater than or equal to the preset reference value as a block corresponding to the flat area. Conversely, the area detection unit 620 may recognize a block with a high frequency component less than the preset reference value as a block that does not correspond to the flat area. That is, the area detection unit 620 may recognize a block in which the high frequency component is less than the preset reference value as a block corresponding to the detail area.

In the example of Fig. 7, blocks provided within a dotted line may correspond to the detail area (edge & texture area), and blocks disposed outside the dotted line may correspond to the flat area (flat area). However, this is only an example for the convenience of explanation, and it is reasonable that it is not limited thereto.

Again, Fig. 6 is explained.

The area detection unit 620 may recognize an area constituted by the blocks extracted as having the high frequency component exceeding the preset reference value as the flat area. The area detection unit 620 may detect a surface area of the flat area on the basis of the number of blocks extracted as having the high frequency component exceeding the preset reference value.

In addition, the area detection unit 620 may further calculate a ratio of the surface area occupied by the flat area to a surface area of the entire screen.

The blending unit 650 may receive information on at least one of the flat area and the detail area from the area detection unit 620. The blending unit 650 may acquire a gain value for de-contour on the basis of the information about at least one of the flat area and the detail area, and generate blur data 630 that blurs an original image on the basis of the gain value for the de-contour. The blending unit 650 may generate the blur data by applying the gain value to the image data and generate result image data by combining the image data with the blur data.

The blending unit 650 may generate blur data that applies a stronger blur to the image data as the gain value increases, and may generate blur data that applies a weaker blur to the image data as the gain value decreases.

The blur data 630 may be alpha-blended with the original image data 610 through the blending unit 650.

The blending unit 650 may blend the original image data 610 and the blur data 630. Here, the blending may mean insertion of pixels corresponding to the blur data into image data 610 or the alpha blending.

Fig. 8 is a flowchart illustrating a method for outputting the image by dynamically setting the de-contour gain on the basis of the detail components of the image in the display device according to the first embodiment of the present disclosure.

The controller 170 may acquire a flat area (S101).

The flat area is the same as described above, and thus, duplicated descriptions will be omitted.

The controller 170 may acquire a gain value for removing contour noise on the basis of a surface area of the flat area (S103).

First, the controller 170 may calculate the surface area of the flat area on the basis of the flat area acquired in operation S101. The controller 170 may acquire the gain value for removing the contour noise on the basis of the surface area of the generated flat area.

The memory 140 may store de-contour gain information for the gain value for removing the contour noise depending on the surface area of the flat area.

The de-contour gain information may include a de-contour gain curve or a de-contour gain table that maps the surface area of the flat area and the gain value for removing the contour noise.

The controller 170 may acquire a gain value corresponding to the surface area of the flat area on the basis of the de-contour gain information.

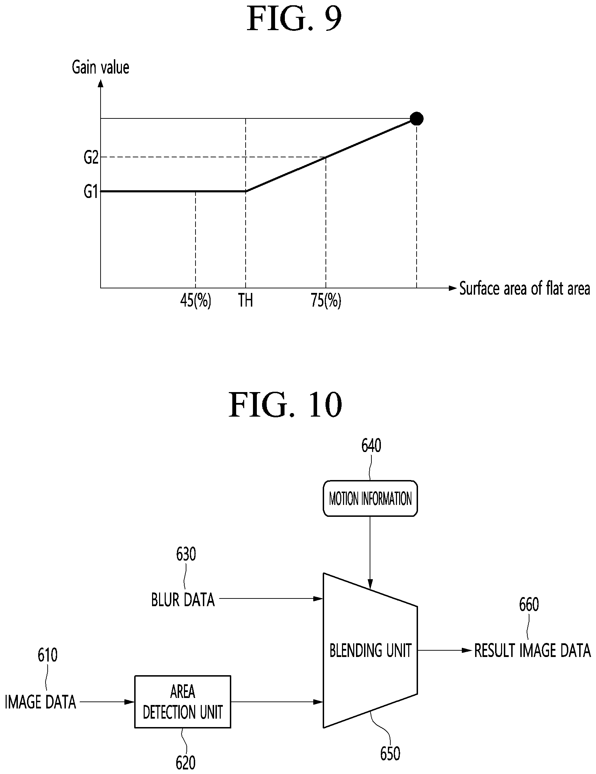

Fig. 9 is a view illustrating an example of the de-contour gain information according to the first embodiment of the present disclosure.

As illustrated in Fig. 9, the memory 140 may store the curve that maps the surface area of the flat area and the gain value for removing the contour noise. The surface area of the flat area may be an area value itself or may represent a ratio of a surface area occupied by the flat area to the entire screen.

In this specification, the surface area of the flat area is assumed to be the ratio of the surface area occupied by the flat area to the entire screen, but this is only an example for the convenience of explanation, and it is reasonable that it is not limited thereto.

Referring to the example of Fig. 9, when the surface area of the flat area is less than or equal to a threshold value TH, the gain value may be fixed to a first value G1, and when the surface area of the flat area is greater than or equal to the threshold value TH, the gain value may increase as the surface area of the flat area increases, and thus, the surface area of the flat area and the gain value may be mapped. In this specification, the threshold value TH may be a preset value, which may be 60%. However, this is only an example and should not be limited thereto.

Thus, the controller 170 may acquire the gain value as the first value G1 when the surface area of the flat area is 45% and may acquire the gain value as the second value G2 greater than the first value G1 when the surface area of the flat area is 75%.

In this manner, when the surface area of the flat area is equal to or less than the threshold value TH, the contour noise is removed at a constant level to protect the detail components, and when the surface area of the flat area is equal to or greater than the threshold value TH, a contour noise removal intensity increases according to the surface area of the flat area to effectively remove the contour noise on the flat area.

Again, Fig. 8 is explained.

The controller 170 may generate result image data using the acquired gain value (S105).

The controller 170 may generate image data by removing the contour noise from the original image data on the basis of the gain value. The controller 170 may generate blur data by applying the gain value to the original image data, and generate image data as a result of combining the original image data with the blur data.

The controller 170 may output an image according to the result image data (S107).

The controller 170 may output an image according to the result image data through the display 180, and the image output in this manner may be in a state in which the contour noise is removed. That is, the larger the gain value, the less the contour noise may be included in the output image.

According to the second embodiment of the present disclosure, the display device 100 may dynamically set the de-contour gain by considering both the detail components of the image and the motion information to remove the contour noise.

Fig. 10 is a control block diagram for explaining a method for outputting an image by dynamically setting a de-contour gain on the basis of detail components of an image and motion information in a display device according to a second embodiment of the present disclosure.

Except for the motion information, it is similar to that described in Fig. 6, and thus, duplicated descriptions will be omitted.

A blending unit 650 may receive information on at least one of a flat area and a detail area from an area detection unit 620.

In addition, the blending unit 650 may acquire motion information 640. The blending unit 650 may acquire the motion information 640 on the basis of image data 610, and the motion information 640 may mean a value that numerically represents a degree of motion included in the image data, i.e., the amount of motion. In this disclosure, it is explained that the larger the value corresponding to the motion information 640, the more motion is included in the image.

The controller 170 may acquire the motion information 640 on the basis of a difference between a pixel value of a current frame and a pixel value of a previous frame. For example, the controller 170 may extract an area constituted by pixels in which the difference between the pixel value of the current frame and the pixel value of the previous frame is greater than a preset reference value as a motion area, and acquire the motion information 640 that quantifies the degree of motion on the basis of a ratio of the motion area to the entire surface area of the image. In addition, the controller 170 may determine that an amount of motion is greater as the difference between the pixel value of the current frame and the pixel value of the previous frame increases.

The blending unit 650 may acquire a gain value for de-contour on the basis of information about the flat area and motion information, and generate blur data 630 that blurs an original image on the basis of the gain value for the de-contour. The blending unit 650 may generate the blur data by applying the gain value to the image data and generate result image data by combining the image data with the blur data.

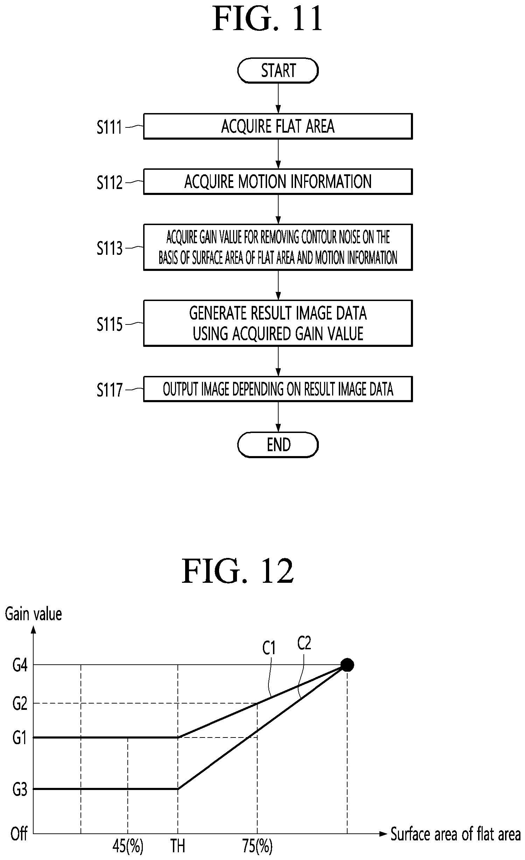

Fig. 11 is a flowchart illustrating a method for outputting the image by dynamically setting the de-contour gain on the basis of the detail components of the image in the display device according to the second embodiment of the present disclosure.

The controller 170 may acquire the flat area (S111) and acquire the motion information (S112).

The flat area and the motion information are the same as described above, and thus, duplicated descriptions will be omitted.

In addition, an order of operations S111 and S112 is only an example and is not limited thereto. That is, the controller 170 may acquire the flat area after acquiring the motion information or may acquire the motion information and the flat area simultaneously.

The controller 170 may acquire a gain value for removing the contour noise on the basis of the surface area of the flat area and the motion information (S113).

That is, the controller 170 may acquire the motion information on the basis of the image data and acquire the gain value on the basis of the surface area of the flat area and the motion information. The gain value when an amount of motion depending on the motion information is large may be less than the gain value when the amount of motion is small.

The memory 140 may store de-contour gain information for the gain value for removing the contour noise according to the surface area of the flat area and the motion information, respectively.

The de-contour gain information may include at least one of a de-contour gain curve or a de-contour gain table that maps the gain value for removing the contour noise according to the surface area of the flat area and the motion information.

As a specific example, the de-contour gain information may include a de-contour gain curve or a de-contour gain table that maps the surface area of the flat area and the gain value by the amount of motion according to the motion information. That is, the de-contour gain information may include a first de-contour gain curve (or de-contour gain table) that maps the surface area of the flat area and the gain value when the motion amount according to the motion information is a first motion amount, a second de-contour gain curve (or de-contour gain table) that maps the surface area of the flat area and the gain value when the motion amount is a second motion amount, etc.

Fig. 12 is a view illustrating an example of the de-contour gain information according to the second embodiment of the present disclosure.

As illustrated in Fig. 12, the memory 140 may store a plurality of curves that map the surface area of the flat area and the gain value for removing the contour noise. For example, the memory 140 may store a first curve that maps the surface area of the flat area and the gain value for removing the contour noise when the amount of motion according to the motion information is the first motion amount, and a second curve that maps the surface area of the flat area and the gain value for removing the contour noise when the amount of motion is the second motion amount. Although only the two curves are illustrated in Fig. 12, this is only an example for convenience of explanation, and the de-contour gain information may include a plurality of curves that map the surface area of the flat area and the gain value for removing the contour noise for each of two or more motion amounts.

The surface area of the flat area is the same as described in Fig. 9. In addition, as described in Fig. 9, each of the first and second curves may have a fixed gain value when the surface area of the flat area is less than or equal to the threshold value TH, and may have a variable gain value when the surface area of the flat area is greater than or equal to the threshold value TH. Particularly, the surface area of the flat area and the gain value may be mapped so that the gain value increases as the surface area of the flat area increases when the surface area of the flat area is greater than or equal to a threshold value TH. Thus, when the surface area of the flat area is less than or equal to a predetermined area, the contour noise is removed at a constant level to protect detail components, and when the surface area of the flat area is greater than or equal to the predetermined area, a contour noise removal intensity increases depending on the surface area of the flat area to effectively remove the contour noise on the flat area.

As in the example of Fig. 12, the gain value may be mapped differently depending on the amount of motion. That is, the first curve C1 may be a curve to which the area of the flat area and the gain value for removing the contour noise are mapped when the amount of motion according to the motion information is the first motion amount. Thus, when the area of the flat area is 45%, the gain value may be mapped to the first value G1, and when the surface area of the flat area is 75%, the gain value may be mapped to the second value G2 that is equal to or greater than the first value G1. The second curve C2 may be a curve to which the surface area of the flat area and the gain value for removing the contour noise are mapped when the amount of motion according to the motion information is the second motion amount that is greater than the first motion amount. Thus, when the surface area of the flat area is 45%, the gain value may be mapped to a third value G3 that is less than the first value G1, and when the surface area of the flat area is 75%, the gain value may be mapped to the first value G1 that is less than the second value G2.

The controller 170 may acquire the gain value on the basis of motion information, maintain the acquired gain value when the surface area of the flat area is less than the preset threshold value, and increase in acquired gain value when the surface area of the flat area is equal to or greater than the threshold value.

As described above, the de-contour gain value that considers not only the surface area of the flat area but also the amount of motion may be mapped, and thus, there is an advantage in that the contour noise is effectively removed when the surface area of the flat area is large even though the amount of motion is large.

Again, Fig. 11 is explained.

The controller 170 may generate result image data using the acquired gain value (S115) and output an image according to the result image data (S117).

Since this is the same as described in operations S105 and S107 of Fig. 8, duplicated descriptions will be omitted.

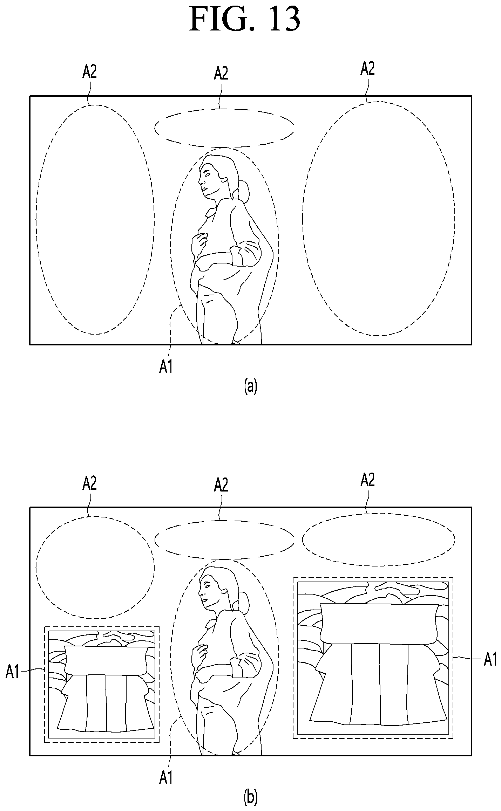

Fig. 13 is a view illustrating an example for explaining a state in which a degree of removal of contour noise varies depending on a surface area of a flat area in the display device according to the second embodiment of the present disclosure.

(a) of Fig. 13 is a view illustrating an example of an image, in which the flat area has a first surface area, and (b) of Fig. 13 is a view illustrating an example of an image, in which the flat area has a second surface area less than the first surface area.

That is, in (a) and (b) of Fig. 13, the first area A1 may represent a detail area, and the second area A2 may roughly represent a flat area.

In the example image of Fig. 13 (a), the surface area of the second area A2 may be about 60% or more, but in the example image of Fig. 13 (b), the surface area of the first area A1 may be about 60% or more.

Thus, since the example image of Fig. 13 (a) has a flat area laser than the exemplary image of Fig. 13 (b), it may be confirmed that the degree of the contour noise removal in the exemplary image of Fig. 13 (a) is stronger than the degree of the contour noise removal in the exemplary image of Fig. 13 (b).

The degree of the contour noise removal may be determined by analyzing the contour information of the image output from the display device 100 by taking a picture using a surface measuring device, etc., and noise distribution, and thus, the degree of the contour noise removal may be confirmed. That is, when a contour lines appears strongly on the image captured and analyzed by the surface measuring device even though it is the flat area that does not include an edge or object, it may be confirmed that there is a lot of contour noise, and if the contour line appears weakly, it may be confirmed that the contour noise is removed. That is, referring to Fig. 13, the second area A2 above the first area A1 including a person exists as the flat area in the same manner in (a) and (b) Figs. 13, and when each output image is photographed with the surface measuring device to check the contour information, if the contour line appears stronger in (b) of Fig. 13, than in (a) of Fig. 13, it may be confirmed that the contour noise is minimized because the surface area of the flat area in the image (a) of Fig. 13 is wider than the preset threshold value, and the contour noise is strongly removed.

According to the second embodiment of the present disclosure, since the surface area of the flat area is considered together with the motion information alone, there is an advantage in that the problem of the contour noise not being removed or being removed weakly when the amount of motion is large when the entire image, which is mostly the flat area, moves is improved.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A display device comprising:
a controller configured to acquire a surface area of a flat area having few detail components on the basis of image data, acquire a gain value for removing contour noise on the basis of the surface area of the flat area, and generate result image data on the basis of the gain value; and
a display configured to output an image on the basis of the result image data.

2. The display device according to claim 1, wherein, when the surface area of the flat area is less than a preset threshold value, the gain value is fixed.

3. The display device according to claim 1, wherein, when the surface area of the flat area is equal to or greater than a preset threshold value, the gain value is variable.

4. The display device according to claim 3, wherein the larger the surface area of the flat area, the higher the gain value.

5. The display device according to claim 1, wherein the controller is configured to acquire motion information on the basis of the image data and acquire the gain value on the basis of the surface area of the flat area and the motion information.

6. The display device according to claim 5, wherein the gain value when an amount of motion depending on the motion information is large is less than the gain value when the amount of motion is small.

7. The display device according to claim 5, wherein the controller is configured to acquire the gain value on the basis of the motion information, maintain the acquired gain value when the surface area of the flat area is less than a preset threshold value, and increase in acquired gain value when the surface area of the flat area is equal to or greater than the threshold value.

8. The display device according to claim 1, wherein the controller is configured to convert the image data into a frequency domain and acquire the surface area of the flat area on the basis of a high frequency component of the converted frequency domain.

9. The display device according to claim 8, wherein the controller is configured to divide a screen into a plurality of blocks, extract blocks, in which the high frequency component is greater than a preset reference value, from each of the plurality of blocks, and require the surface area of the flat area on the basis of the number of extracted blocks.

10. The display device according to claim 1, wherein the controller is configured to generate blur data by applying the gain value to the image data and generate the result image data by combining the image data with the blur data.

11. A method for operating a display device, the method comprising:
acquiring a surface area of a flat area having few detail components on the basis of image data;
acquiring a gain value for removing contour noise on the basis of the surface area of the flat area;
generate result image data on the basis of the gain value; and
outputting an image on the basis of the result image data.

12. The method according to claim 11, wherein, when the surface area of the flat area is less than a preset threshold value, the gain value is fixed, and
when the surface area of the flat area is equal to or greater than a preset threshold value, the gain value is variable.

13. The method according to claim 11, further comprising acquiring the gain value on the basis of the motion information,
wherein the acquiring of the gain value comprises acquiring the gain valve on the basis of the surface area of the flat area and the motion information.

14. The method according to claim 11, wherein the acquiring of the surface area of the flat area comprises:
converting the image data into a frequency domain; and
acquiring the surface area of the flat area on the basis of a high frequency component of the converted frequency domain.

15. The method according to claim 11, wherein the generating of the result image data comprises:
applying the gain value to the image data to generate blurring image data' and
combining the image data with the blurring image data to generate the result image data.
